Europäisches Patentamt

European Patent Office

Office européen des brevets

(11) Publication number : **0 661 562 A2**

(12) # EUROPEAN PATENT APPLICATION

(21) Application number : 94309792.3

(22) Date of filing : 23.12.94

(51) Int. Cl.$^6$ : **G02B 6/12,** G02B 6/13, G02B 21/00, G11B 7/00

(30) Priority : 28.12.93 JP 335672/93
28.12.93 JP 335673/93
13.05.94 JP 99450/94
19.10.94 JP 253666/94

(43) Date of publication of application :
05.07.95 Bulletin 95/27

(84) Designated Contracting States :
DE FR GB

(71) Applicant : NIKON CORPORATION
2-3, Marunouchi 3-chome
Chiyoda-ku
Tokyo (JP)

(72) Inventor : Iwasaki, Yutaka, Kosumo Yokohama
Kozukue
Sekandouingu 404,
61-1, Kozukue-cho,
Kohoku-ku
Yokohama-shi, Kanagawa-ken (JP)
Inventor : Iwasaki, Jun
Daisan Ohfuna Pakutaun G-710,
1555-1, Kasama-cho
Sakae-ku, Yokohama-shi, Kanagawa-ken (JP)
Inventor : Oki, Hiroshi
Azamino Riiberu B-204,
1-4, Susukino 1-chome
Aoba-ku, Yokohama-shi, Kanagawa-ken (JP)
Inventor : Matsuura, Keiji
Hokoryo 206,
10-14, Kodai 1-chome,
Miyamae-ku
Kawasaki-shi, Kanagawa-ken (JP)

(74) Representative : Burke, Steven David et al
R.G.C. Jenkins & Co.
26 Caxton Street
London SW1H 0RJ (GB)

(54) Optical information detection device.

(57) An optical information detection device includes a substrate, a double-moded channel waveguide formed on the substrate, the double-moded channel waveguide having an incident end face which receives incident light, and zeroth-order mode light and first-order mode light being excited in the double-moded channel waveguide in accordance with light incident on the incident end face, a photodetector for detecting the intensity distribution of light propagating through the double-moded channel waveguide, and a first member for selectively removing the zeroth-order mode light excited in the double-moded channel waveguide. Alternatively, the optical information detection device includes a second member for selectively removing light propagating near the center of the double-moded channel waveguide in place of the first member.

EP 0 661 562 A2

# FIG.1

## BACKGROUND OF THE INVENTION

### Field of the Invention

The present invention relates to an optical information detection device for detecting optical information of light incident on a double-moded channel waveguide by utilizing mode interference between zeroth-order (fundamental) mode light and first-order mode light in the double-moded channel waveguide.

### Related Background Art

In recent years, optical waveguides have received a lot of attention in various fields. This is because the use of an optical waveguide makes an optical system compact and lightweight, and obviates the adjustment of the optical axis. The optical waveguides are classified into a single-moded waveguide in which only zeroth-order mode light is excited, a double-moded waveguide in which two mode light components, i.e., zeroth- and first-order mode light components are excited, and a multi-moded waveguide in which three or more mode light components, i.e., zeroth-, first-order, and second- or higher-order mode light components are excited, depending on the difference between the refractive indices of an optical waveguide (core portion) and a substrate (cladding portion), and the width or refractive index distribution of the optical waveguide.

As an application of such optical waveguides to a totally new field, an optical information detection device, which utilizes a mode interference phenomenon in a double-moded channel waveguide, is known, and is receiving a lot of attention from researchers in various fields as a device which may be applicable to various fields. The basic principle of the optical information detection device and its application to a confocal laser scanning mode interference microscope are described in detail in H. Ooki and J. Iwasaki, Opt. Commun. 85 (1991) 177-182, J. Iwasaki et al., Proc. OITDA 2nd Int. Forum, Naha, 1992, p. 37, and Japanese Laid-Open Patent Application Nos. 4-208913 and 4-296810. An application of the optical information detection device to an optical pickup is described in detail in Japanese Laid-Open Patent Application No. 4-252444.

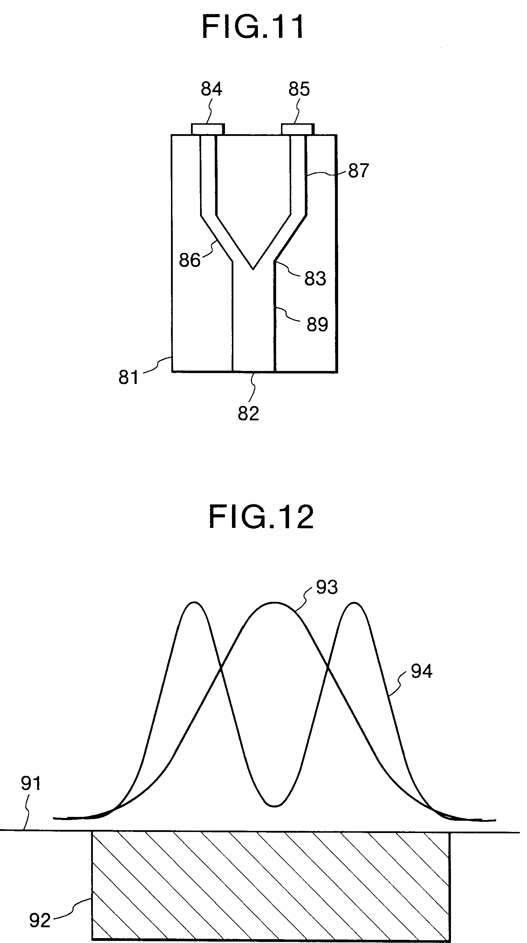

Fig. 11 shows the basic structure of the optical information detection device used in these inventions. The optical information detection device is constituted by a double-moded channel waveguide 89 which excites zeroth-order mode light and first-order mode light in accordance with light incident on an incident end face 82, and is formed on a substrate 81, a split region 83 which is connected to the double-moded channel waveguide 89 and splits light propagating from the double-moded channel waveguide 89, two light-distribution single-moded channel waveguides 86 and 87 for guiding light components split by the split region 83, and photodetectors 84 and 85 for detecting light components emerging from the light-distribution single-moded channel waveguides 86 and 87. In Fig. 11, light is distributed into the light distribution single-moded channel waveguides 86 and 87, and light components emerging therefrom are detected by the photodetectors 84 and 85, so as to detect the intensity distribution of light propagating through the double-moded channel waveguide 89. However, a light detection array such as a two-split photodetector, PSD, linear sensor, or the like may be directly connected to the double-moded channel waveguide 89 without arranging the light-distribution single-moded channel waveguides 86 and 87 to directly detect light emerging from the double-moded channel waveguide 89, thus similarly detecting the intensity distribution of light.

In the optical information detection device with the above-mentioned arrangement, two factors are considered to bring about an asymmetricity of the light intensity distribution in the double-moded channel waveguide 89. One factor is an asymmetricity of the intensity distribution of incident light, and the other factor is an asymmetricity of the phase distribution of incident light. By appropriately selecting the length of the double-moded region, the asymmetricity in either case can be efficiently detected. The asymmetricity of the intensity distribution allows observation of, e.g., the distribution of reflectances of light of an object to be detected, and the asymmetricity of the phase distribution allows observation of, e.g., the distribution of tilts, steps, or heights of an object to be detected.

The length of the double-moded region corresponds to the effective length of the double-moded channel waveguide. For example, when the double-moded channel waveguide 89 is connected to the two light-distribution single-moded channel waveguides 86 and 87 via the split region 83, optical coupling occurs between the two light-distribution single-moded channel waveguides in a region where the interval between the two light-distribution single-moded channel waveguides is not so large, and light may propagate in the two guided modes in this region. Therefore, the length of the double-moded region means an actual propagation length of light in the two guided modes.

When a length L of the double-moded region is a length expressed by:

$$L = L_c(m + 1/2) \qquad (m = 0, 1, 2,...) \quad (1)$$

where $L_c$ is the complete coupling length (a length at which the phase difference between the zeroth-order mode light and the first-order mode light becomes $\pi$), only a gradient a (phase information) of the phase in a light spot incident on an incident edge can be detected. On the other hand, when the length L is a length expressed by:

$$L = mL_c \qquad (m = 1, 2, ...) \qquad (2)$$

only a gradient a (amplitude information) of the amplitude in the light spot incident on the incident edge can be detected.

A signal intensity $I_0$ obtained from one of the two photodetectors shown in Fig. 11 is expressed as follows in correspondence with the length of the double-moded region given by equations (1) and (2):

In the case of equation (1):

$$I_0 = C_0{}^2 + (-1)^m 2\alpha C_0 C_1 \qquad (3)$$

In the case of equation (2):

$$I_0 = C_0{}^2 - (-1)^m 2a C_0 C_1 \qquad (4)$$

where constants $C_0$ and $C_1$ represent values (excitation efficiency) proportional to the amplitudes of the zeroth-order light and the first-order mode light which propagate through the double-moded waveguide. When both the phase information and the amplitude information of light incident on the double-moded channel waveguide are to be observed, the length of the double-moded region can be selected to be a length other than those given by equations (1) and (2). At this time, the signal intensity $I_0$ obtained from the photodetector becomes an intensity obtained by adding equations (3) and (4) at a predetermined ratio in accordance with the length of the double-moded region.

However, in the optical information detection device, when the gradient of the phase or amplitude to be detected is small, and the signal component amount based on the gradient becomes very small as compared to the incident light amount, a minimum value of the phase or amplitude which can be detected by the optical information detection device undesirably becomes large, and the gradient of the phase or amplitude to be detected cannot often be accurately detected.

## SUMMARY OF THE INVENTION

It is an object of the present invention to provide an optical information detection device which can accurately detect the phase or amplitude even when the gradient of the phase or amplitude to be detected is small.

In order to achieve the above object, according to the first aspect of the present invention, there is provided an optical information detection device comprising: a substrate; a double-moded channel waveguide formed on the substrate, the double-moded channel waveguide having an incident end face which receives incident light, and zeroth-order mode light and first-order mode light being excited in the double-moded channel waveguide in accordance with light incident on the incident end face; a photodetector for detecting an intensity distribution of light propagating through the double-moded channel waveguide; and a first member for selectively removing the zeroth-order mode light excited in the double-moded channel waveguide.

waveguide.

The optical information detection device preferably further comprises: a split region which splits light propagating through the double-moded channel waveguide and is formed on the substrate; and two light-distribution channel waveguides which guide light components split by the split region, and are formed on the substrate. In this case, the photodetector detects light components respectively emerging from the two light-distribution channel waveguides.

The first member preferably comprises: a TE/TM mode converter which is arranged on the double-moded channel waveguide, and performs selective TE/TM mode conversion of a direction of polarization of the zeroth-order mode light excited in the double-moded channel waveguide; and a polarization separation member which is arranged between the TE/TM mode converter and the photodetector and blocks the zeroth-order mode light, which is TE/TM mode-converted by the TE/TM mode converter, so that the zeroth-order mode light does not reach the photodetector.

The TE/TM mode converter preferably comprises an electrode which is arranged on the double-moded channel waveguide, and has a periodic structure.

The polarization separation member preferably comprises a polarization plate which is arranged in front of the photodetector.

The polarization separation member may comprise a metal plate which is arranged on the light-distribution channel waveguide.

Furthermore, in the optical information detection device which comprises: a split region which splits light propagating through the double-moded channel waveguide and is formed on the substrate: and two light-distribution channel waveguides which guide light components split by the split region, and are formed on the substrate, the polarization separation member may comprise: two polarization separation double-moded channel waveguides which are respectively connected to the first light-distribution channel waveguides, each have a predetermined length, and are formed on the substrate; two second split regions which respectively split light components propagating through the polarization separation double-moded channel waveguides, and are formed on the substrate; and four second light-distribution channel waveguides which respectively guide light components split by the second split regions, and are formed on the substrate. In this case, the photodetector detects light components emerging from the two second light-distribution channel waveguides, which guide light including the first-order mode light, of the four second light-distribution channel waveguides.

Alternatively, the first member preferably comprises a coupling channel waveguide which is formed on the substrate, is arranged in the vicinity of and to be substantially parallel to the double-moded channel waveguide, and can be coupled to the zeroth-order mode light propagating through the double-moded channel waveguide.

In this case, it is preferable that the effective refractive index of the coupling channel waveguide with respect to light propagating therethrough be substantially equal to an effective refractive index of the double-moded channel waveguide with respect to the zeroth-order mode light propagating therethrough.

It is also preferable that the substrate have an electrooptic effect, and an electrode for applying an electric field to the coupling channel waveguide be arranged on or in the vicinity of the coupling channel waveguide.

Furthermore, in the optical information detection device which comprises: a split region which splits light propagating through the double-moded channel waveguide and is formed on the substrate; and three light-distribution channel waveguides which guide light components split by the split region, and are formed on the substrate, the first member may comprise: a first TE/TM mode converter which is arranged on the double-moded channel waveguide, and performs selective TE/TM mode conversion of a direction of polarization of the zeroth-order mode light excited in the double-moded channel waveguide; and a second TE/TM mode converter which is arranged on the double-moded channel waveguide, and performs selective TE/TM mode conversion of a direction of polarization of the first-order mode light excited in the double-moded channel waveguide. In this case, the photodetector detects light components emerging from at least the two outer light-distribution channel waveguides of the three light-distribution channel waveguides, and the two outer light-distribution channel waveguides guide only light which has a direction of polarization perpendicular to the direction of polarization of light incident on the double-moded channel waveguide. The central light-distribution channel waveguide of the three light-distribution channel waveguides guides only light which has a direction of polarization perpendicular to the direction of polarization of light propagating through the two outer light-distribution channel waveguides.

Alternatively, the first member may comprise: a TE/TM mode converter which is arranged on the double-moded channel waveguide, and performs selective TE/TM mode conversion of a direction of polarization of the zeroth-order mode light excited in the double-moded channel waveguide. In this case, the photodetector detects light components emerging from at least the two outer light-distribution channel waveguides of the three light-distribution channel waveguides, and the two outer light-distribution channel waveguides guide only light which has the same direction of polarization as the direction of polarization of light incident on the double-moded channel waveguide.

According to the second aspect of the present invention, there is provided an optical information detection device comprising: a substrate; a double-moded channel waveguide formed on the substrate, the double-moded channel waveguide having an incident end face which receives incident light, and zeroth-order mode light and first-order mode light being excited in the double-moded channel waveguide in accordance with light incident on the incident end face; a photodetector for detecting an intensity distribution of light propagating through the double-moded channel waveguide; and a second member for selectively removing light which propagates near the center of the double-moded channel waveguide.

The optical information detection device according to this aspect preferably further comprises: a split region which splits light propagating through the double-moded channel waveguide and is formed on the substrate; and two light-distribution channel waveguides which guide light components split by the split region, and are formed on the substrate. In this case, the photodetector detects light components respectively emerging from the two light-distribution channel waveguides.

The second member preferably comprises a stripe-shaped metal plate which has a width smaller than a width of the double-moded channel waveguide, and is arranged on a surface of the double-moded channel waveguide so that the center thereof coincides with the center of the double-moded channel waveguide.

Alternatively, the second member preferably comprises a selective removal channel waveguide which has a width smaller than a width of the double-moded channel waveguide, and is connected to the double-moded channel waveguide so that the center thereof coincides with the center of the double-moded channel waveguide.

In this case, the width of the selective removal channel waveguide is preferably a width with which the first-order mode light propagating through the double-moded channel waveguide is cut off. Furthermore, the device preferably further comprises a photodetector for detecting light emerging from the selective removal channel waveguide.

The principle of the present invention will be explained below.

In the conventional optical information detection device (Fig. 11), the gradient of the phase or amplitude detected by one of the two photodetectors 84 and 85 is obtained as a sum of a component (signal component) proportional to a product of the gradient ($\alpha$) of the phase or the gradient (a) of the amplitude and a product ($C_0C_1$) of values proportional to the amplitudes of the zeroth-order mode light and the first-order mode light, and a component ($C_0^2$: offset component) proportional to a square of the amplitude of the zeroth-order mode light, as shown in equation (3) or (4). In the output from the other photodetector, the offset component is in phase with that in the former output, and the signal component has a phase opposite to that in the former output. Therefore, by calculating a difference between the outputs from the two photodetectors, a signal from which the offset components as in-phase components are suppressed can be obtained. At this time, in order to detect a signal of, e.g., the gradient of the amplitude or phase, a signal component obtained by calculating the difference between the outputs from the two photodetectors must be larger than various noise components such as heat noise generated by the photodetectors.

The present inventors found that the amplitude of the zeroth-order mode light in the double-moded channel waveguide in accordance with light incident on the double-moded channel waveguide was considerably larger than that of the first-order mode light. More specifically, the output signal from one photodetector is a signal in which a small signal component is superposed on a very large offset component. Therefore, when the gradient of the phase or amplitude of an object to be detected becomes small, a signal is buried in noise components and can no longer be detected. For this reason, in order to decrease the gradient of a minimum phase or amplitude which can be detected by the optical information detection device, the S/N ratio of optical information detection in the optical information detection device must be increased.

As is apparent from equation (3) or (4), in order to increase the S/N ratio of optical information detection, the zeroth-order light can be suppressed by the device side before execution of electrical signal processing. The present invention is based on such an idea. More specifically, the device comprises the first member for selectively removing the zeroth-order mode light to suppress the zeroth-order mode light.

A channel waveguide is formed on a substrate such as a lithium niobate substrate consisting of a material having an electrooptic effect and an optical anisotropy, and an electric field is applied in a specific direction of the channel waveguide. With this structure, TE mode light and TM mode light, which propagate through the channel waveguide, can be coupled to each other, and the direction of polarization of light excited in the channel waveguide can be rotated from the TE mode to the TM mode or vice versa. The TE and TM modes are two modes having orthogonal polarization states. For example, when light propagates through a double-moded channel waveguide 92 in Fig. 12, light whose amplitude direction of the electric field coincides with the up-and-down direction of the plane of the drawing of Fig. 12 is TM mode light, and light whose amplitude direction of the electric field coincides with the right-and-left direction of the plane of the drawing of Fig. 12 is TE mode light. Such a device is known as a TE/TM mode converter, and its example is described in R. C. Alferness, Appl. Phys. Lett. 36, (1980) 513.

In this reference, a channel waveguide is formed on a Y-propagation lithium niobate substrate by a Ti-diffusion process, and an interdigital electrode having a periodic structure is formed on the channel waveguide. With this device, an electric field is applied in the direction of the Y-axis of the lithium niobate substrate upon application of a voltage.

In the TE/TM mode converter with the above-mentioned structure, when the effective refractive index difference |NTM - NTE| between the TE and TM modes (NTM: the effective refractive index of the TM mode, NTE: the effective refractive index of the TE mode), and the periodic interval $\Lambda$ of the interdigital electrode have the following relationship therebetween, a phase matching condition between TE and TM mode light components can be obtained, and mode conversion between these modes occurs:

$$2\pi |NTM - NTE|/\lambda = 2\pi/\Lambda \quad (5)$$

where $\lambda$ is the wavelength of light propagating through the waveguide.

The zeroth- and first-order mode light components, which propagate through the double-moded waveguide, have different effective refractive indices although they have the same polarization state. Therefore, the shape of the interdigital electrode can be designed to satisfy equation (5) for only the zeroth-order mode, and in this case, TE/TM mode conversion can be performed for only the zeroth-order mode. On the other hand, light separation between the TE and TM modes is achieved by normal polarization separation, and TE mode light and TM mode light can be easily separated by arranging various members (polarization separation members) such as a polarization plate which shields unnecessary light (e.g., TM mode light) and allows necessary light (e.g., TE mode light) to pass therethrough.

The present invention realizes a novel function of suppressing zeroth-order mode light in a double-moded channel waveguide by combining the TE/TM conversion technique for selectively performing TE/TM mode conversion of only the zeroth-order mode light, and the polarization separation technique for separating TE and TM mode light components and suppressing the TE/TM mode-converted zeroth-order mode light. More specifically, as the first member for selectively removing the zeroth-order mode light, the TE/TM mode converter and the polarization separation member are arranged. As a result, the direction of polarization of only the zeroth-order mode light excited in the double-moded channel waveguide is rotated, and thereafter, only the TE/TM mode-converted zeroth-order mode light is blocked by the polarization separation member so as not to reach the photodetector, thereby suppressing the zeroth-order mode light and improving the S/N ratio.

On the other hand, by adjusting the voltage applied to the interdigital electrode, the conversion efficiency of the TE/TM mode converter can be changed. More specifically, when the zeroth- and first-order mode light components propagate through the double-moded channel waveguide, the ratio between the TE and TM modes of the zeroth-order mode light and that between the TE and TM modes of the first-order mode light can be arbitrarily adjusted by arranging a TE/TM mode converter for the zeroth-order mode light and a TE/TM mode converter for the first-order mode light on the double-moded channel waveguide. Therefore, of the zeroth- and first-order mode light components, which propagate in the TE or TM mode, some light components of the zeroth-order mode light are TE/TM mode-converted, and zeroth-order mode light components which are not TE/TM mode-converted, and the first-order mode light are detected, or some light components of the zeroth-order mode light and the first-order mode light are TE/TM mode-converted, and the TE/TM mode-converted light components are detected, thereby suppressing the zeroth-order mode light. In this manner, in order to detect only the TM or TE mode light, in three light-distribution channel waveguides for guiding light components distributed by a split region connected to the double-moded channel waveguide, the two outer light-distribution channel waveguides are designed to guide only light (mode light including a large amount of first-order mode light) in one of the TE and TM modes, and the central light-distribution channel waveguide is designed to guide a large amount of zeroth-order mode light, so that the two outer light-distribution channel waveguides can efficiently detect a signal from which the zeroth-order mode light is suppressed.

Furthermore, the present inventors made extensive studies, and found that the first member for selectively removing only zeroth-order mode light could be achieved by a method different from that described above.

In general, it is well known that light power shifts from one optical waveguide to the other waveguide by coupling of the modes propagating through adjacent optical waveguides, and a device which applies this technique is known as a directive coupler. The shift of light power is controlled by the difference between the equivalent refractive indices of the coupled modes propagating through the optical waveguides, the interval, and the length of the coupled region.

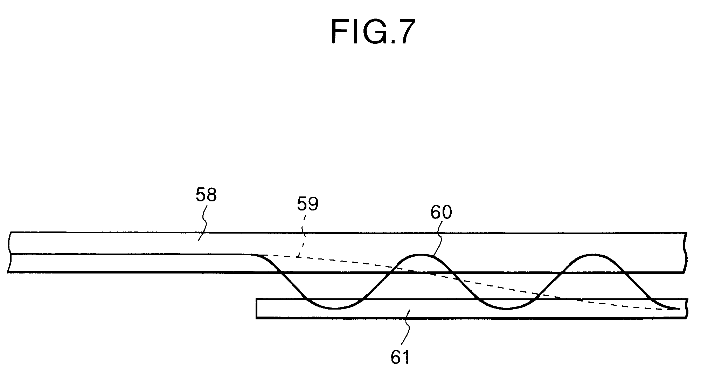

On the other hand, the zeroth- and first-order mode light components which propagate through the double-moded channel waveguide have different equivalent refractive indices. Therefore, when a coupling channel waveguide is arranged in the vicinity of the double-moded channel waveguide, and (1) the equivalent refractive index of the coupling channel, (2) the interval between the coupling channel waveguide and the double-moded channel waveguide, and guide and the double-moded channel waveguide, and (3) the length of the coupling channel waveguide are appropriately chosen, only the zeroth-order light can be selectively power-shifted to the coupling channel waveguide. Preferably, when the equivalent refractive index of the coupling channel waveguide is set to be almost equal to that of the zeroth-order mode light, coupling of the zeroth-order mode light between the double-moded channel waveguide and the coupling channel waveguide becomes more stronger than that of the first-order mode light. Therefore, the zeroth-order mode light power-shifts by a shorter distance than that required for the first-order mode light. Fig. 7 shows the principle of the power shift. In Fig. 7, the centroids of the distributions of the powers of the first- and zeroth-order mode light components, which propagate through a double-moded channel waveguide 58, are respectively expressed by a broken curve 59 and a solid curve 60. Both the mode light components shift from the left to the right in Fig. 7. In a region where the double-moded channel waveguide 58 solely exists, the centroids of the powers of the zeroth- and first-order mode light components are located at the center of the double-moded channel waveguide, and overlap each other. However, when a coupling channel waveguide 61 appears in the vicinity of the light, the zeroth- and first-order mode light components are coupled to the coupling channel waveguide 61, and power shift begins. However, when the equivalent refractive index of the coupling channel waveguide 61 is set to be closer to that of the zeroth-order mode light than that of the first-order mode light, the zeroth-order mode light power-shifts in a shorter period than the first-order mode light. Therefore, when this coupling length is selected to be a length with which the zeroth-order mode light sufficiently power-shifts and almost no first-order mode light power-shifts, only the zeroth-mode light selectively power-shifts to the coupling channel waveguide 61, and is removed. Therefore, when the coupling channel waveguide is arranged as the first member in the vicinity of and to be parallel to the d ouble-moded channel waveguide in the optical information detection device, zeroth-order mode light excited in the double-moded channel waveguide can be selectively removed, and the S/N ratio can be improved. Strictly speaking, a super mode consisting of two waveguides (the channel waveguide 61 and the double-moded channel waveguide 58) in Fig. 7 must be given a consideration. However, according to A. Kumar et al., Appl. Opt., 31 (1992) 5092, the above simplification is justifiable.

The present invention paid attention to the fact that the mode shapes of the zeroth- and first-order mode light components were largely different from each other, and obtained a new idea of suppressing the zeroth-order mode light by utilizing this fact. Fig. 12 illustrates the intensity distributions observed from a section perpendicular to the propagation direction of the zeroth- and first-order mode light components in the same scale together with the section of the double-moded channel waveguide. Note that the amplitudes of the zeroth- and first-order mode light components are set to be almost equal to each other for the sake of simplicity in Fig. 12. As is apparent from Fig. 12, an intensity distribution 93 of the zeroth-order mode light becomes large near the center of the width of the double-moded channel waveguide 92 formed on a substrate 91. In contrast, an intensity distribution 94 of the first-order mode light becomes small near the center of the width of the double-moded channel waveguide 92.

Therefore, it is obvious that only the zeroth-order mode light can be mainly removed by selectively removing light near the center of the double-moded channel waveguide in the optical information detection device. It is well known that light propagating through an optical waveguide can be removed from the optical waveguide by an absorption, split, scattering, or radiation mode or by coupling with a waveguide mode of another optical waveguide. According to the present invention, the second member for selectively removing light near the center of the width of the double-moded channel waveguide is arranged by utilizing such knowledge.

The present inventors made further studies and found that when a metal plate having a width smaller than the width of the double-moded channel waveguide is arranged as the second member at the center of the surface of the double-moded channel waveguide, light near the center of the double-moded channel waveguide can be selectively absorbed. The absorption characteristics, in which light excited in the optical waveguide is absorbed by the metal plate by arranging the metal plate on the optical waveguide, have polarization dependence, as can be seen from the fact that they are utilized to realize a TE/TM mode converter in, e.g., Y. Suematsu et al., Appl. Phys. Lett., Vol. 21, No. 6 (1972). TM mode light is absorbed more efficiently than TE mode light. However, it is theoretically possible to suppress the TE mode light to a desired amplitude by increasing the length of the metal plate.

Also, the present inventors found that when a selective removal channel waveguide, which has a width smaller than that of the double-moded channel waveguide and has a center coinciding width the double-moded channel waveguide, is connected, as the second member, to the double-moded channel waveguide, only light excited near the center of the double-moded channel waveguide can be excited in the selective removal channel waveguide. Therefore, with this method as well, light excited near the center of the double-moded channel waveguide can be selectively removed.

Since the present invention adopts the above-mentioned arrangement of the optical information detection device, a phase or amplitude can be accurately detected even when the gradient of the phase or amplitude to be detected is small.

The above and other objects, features and advantages of the present invention are explained hereinafter and may be better understood by reference to the drawings and the descriptive matter which follows.

## BRIEF DESCRIPTION OF THE DRAWINGS

Fig. 1 is a schematic diagram showing a confocal laser scanning mode differential interference microscope which uses an optical information detection device according to the first embodiment of the present invention;
Fig. 2 is a schematic diagram showing an optical pickup apparatus which uses an optical information detection device according to the second embodiment of the present invention;
Fig. 3 is a schematic view showing an optical information detection device according to the third embodiment of the present invention;
Fig. 4 is a schematic diagram showing a confocal laser scanning mode interference microscope which uses an optical information detection device according to the fourth embodiment of the present invention;
Fig. 5 is a schematic diagram showing a confocal laser scanning mode interference microscope which uses an optical information detection device according to the fifth embodiment of the present invention;
Fig. 6 is a schematic diagram showing a confocal laser scanning mode interference microscope which uses an optical information detection device according to the sixth embodiment of the present invention;
Fig. 7 is an explanatory view showing the principle of power shift between channel waveguides according to the sixth embodiment of the present invention;
Fig. 8 is a schematic diagram showing a confocal laser scanning mode interference microscope which uses an optical information detection device according to the seventh embodiment of the present invention;
Fig. 9 is a schematic diagram showing a confocal laser scanning mode interference microscope which uses an optical information detection device according to the eighth embodiment of the present invention;
Fig. 10 is a schematic view showing a modification of the optical information detection device according to the first embodiment of the present invention;
Fig. 11 is a schematic view showing a conventional optical information detection device; and

Fig. 12 is a view showing the intensity distributions of zeroth- and first-order modes excited in a double-moded channel waveguide.

## DETAILED DESCRIPTION OF THE PREFERRED EMBODIMENTS

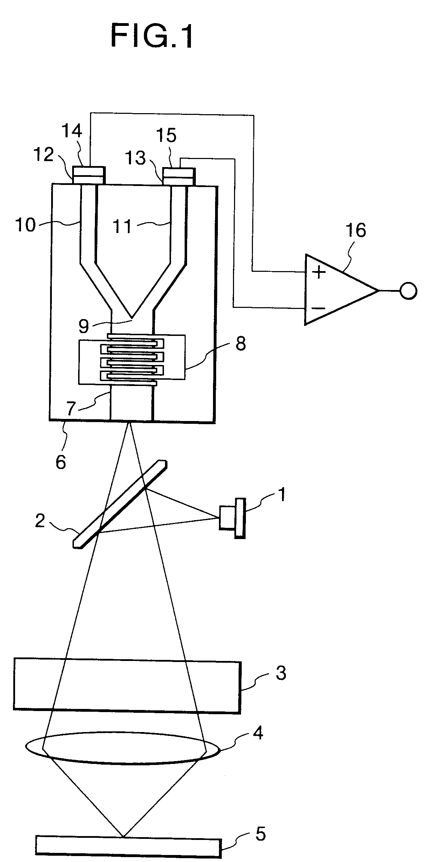

Fig. 1 is a schematic diagram showing a confocal laser scanning mode interference microscope which uses an optical information detection device according to the first embodiment of the present invention. The confocal laser scanning mode interference microscope is disclosed in detail in, e.g., Japanese Laid-Open Patent Application No. 4-208913.

In the confocal laser scanning mode interference microscope, light emitted from a linearly polarized laser light source 1 is reflected by a half mirror 2, and is focused on the surface of an object 5 to be detected via an X-Y scanning means 3 and a lens 4. The light reflected by the surface of the object 5 to be detected is transmitted through the lens 4, the X-Y scanning means 3, and the half mirror 2 again, and is incident on the incident end face of a double-moded channel waveguide 7. The double-moded channel waveguide 7 and light-distribution single-moded channel waveguides 10 and 11 are formed by thermally diffusing titanium on a lithium niobate substrate 6. The light incident on the double-moded channel waveguide 7 excites zeroth- and first-order mode light components in correspondence with a step or a change in reflectance in the spot focused on the object 5 to be detected. The laser light source 1 is arranged, so that light to be excited in the substrate is TE mode light.

The substrate 6 used in the first embodiment is an X-cut Y-propagation lithium niobate substrate, and has an optical anisotropy and an electrooptic effect. Therefore, when a voltage is applied to an interdigital electrode 8, which is arranged on the double-moded channel waveguide 7 via a silicon oxide buffer layer and has a periodic structure, and an electric field is applied to the double-moded channel waveguide 7, the interdigital electrode 8 (an electrode having a periodic structure) serves as a TE/TM mode converter. The shape of the interdigital electrode 8 (an electrode having a periodic structure) is designed to selectively TE/TM mode-convert only the zeroth-order mode light which propagates in the double-moded channel waveguide 7. In the first embodiment, since the wavelength of light emitted from the laser light source 1 was 632.8 nm, and the effective refractive indices of TE and TM mode light components were respectively set to be NTE = 2.20670 and NTM = 2.29663, the period $\Lambda$ of the interdigital electrode 8 (an electrode having a periodic structure) was set to be 7.04 $\mu$m.

The zeroth-order mode light which is TE/TM mode-converted from the TE mode to the TM mode by the interdigital electrode 8 and the first-order mode light which is not TE/TM mode-converted are split into the two light-distribution channel waveguides 10 and 11 by a waveguide split region 9. Photodetectors 14 and 15 are attached to the exit edges of the two light-distribution single-moded channel waveguides 10 and 11 via polarization plates 12 and 13, which selectively transmit TE mode light therethrough. For this reason, the zeroth-order mode light converted to the TM mode is blocked so as not to reach the photodetectors 14 and 15. As a result, the output from a subtraction circuit 16 exhibits a high S/N ratio since an offset component is suppressed.

Note that the first embodiment adopts the Y-propagation lithium niobate substrate. When an X-propagation lithium niobate substrate is used, the same effect as described above can be expected by a periodic structure electrode. A TE/TM mode converter using a Z-propagation lithium niobate substrate is proposed in, e.g., M. Haruna, J. Shinoda and H. Nishihara, "An efficient TE-TM mode converter using a z-propagation $LiNbO_3$ waveguide", Trans. IEEE, E69, 4 (1986) 418. Since TE and TM modes almost degenerate in the Z-propagation substrate, a TE/TM mode converter formed on the Z-propagating substrate does not use a periodic structure electrode used in the X- and Y-propagation substrates. For this reason, such a TE/TM mode converter has a feature of allowing an operation in a relatively wide wavelength range. However, when this TE/TM mode converter is applied to the present invention, it is difficult to TE/TM mode-convert only one of the zeroth- and first-order modes. Therefore, the X- or Y-propagation substrate is preferably used as the substrate.

In the first embodiment, TE/TM mode conversion is performed for the zeroth-order mode light. Conversely, TE/TM mode conversion may be performed for the first-order mode light. However, in this case, after the zeroth-order mode light is suppressed, the directions of polarization of the zeroth- and first-order mode light components must be matched with each other again.

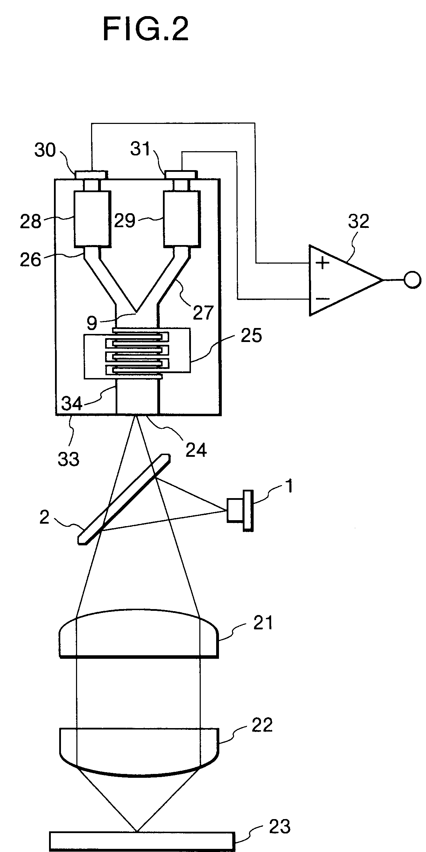

Fig. 2 is a schematic diagram showing an optical pickup apparatus which uses an optical information detection device according to the second embodiment of the present invention. The optical pickup apparatus is disclosed in detail in Japanese Laid-Open Patent Application No. 4-252444. Note that the same reference numerals in this embodiment denote the same parts as in the first embodiment, and a detailed description thereof will be omitted.

Although the arrangement of the second embodiment is substantially the same as that of the first embodiment, an object to be detected in the second embodiment is an optical disk 23, and a double-moded channel waveguide 34 is manufactured to have a length which satisfies equation (1). In the second embodiment, a laser beam emitted from a laser light source 1 is reflected by a half mirror 2, and is collimated by a collimator lens 21. Thereafter, the light beam forms a laser spot having a diffraction limit size on the optical disk 23 via an objective lens 22. The light reflected by the optical disk 23 is transmitted through the half mirror 2 via the objective lens 22 and the collimator lens 21 again, and is focused on an incident edge 24 of the double-moded channel waveguide 34 to form a laser spot here again. Zeroth- and first-order mode light components excited in the double-moded channel waveguide 34 by the laser spot propagate through the double-moded channel waveguide 34 while they interfere with each other.

A substrate 33 used in the second embodiment is the same as that used in the first embodiment. An interdigital electrode 25 having a periodic structure is formed on the double-moded channel waveguide 34 via a silicon oxide buffer layer, and serves as a TE/TM mode converter. Thereafter, as in the first embodiment, the direction of polarization of the zeroth-order mode light which propagates in the TE mode is selectively rotated to the TM mode, and zeroth-order mode light in the TE mode, which is not polarization-converted, zeroth-mode light in the TM mode, and the first-order mode light in the TE mode are excited in two light-distribution channel waveguides 26 and 27. Aluminum rectangular patterns (metal plates) 28 and 29 are arranged on the surfaces of the two light-distribution channel waveguides 26 and 27 without any buffer layer. A polarizer consisting of such a metal plate is well known to those who are skilled in the art, and the metal plate on each optical waveguide selectively absorbs a TM mode light component of light components propagating through the optical waveguide. Therefore, the zeroth-order mode light converted into the TM mode attenuates there. On the other hand, the zeroth-order mode light which is not converted from the TE mode, and the first-order mode light reach photodetectors 30 and 31 with almost no attenuating there. Note that the aluminum rectangular patterns 28 and 29 may be formed on the double-moded channel waveguide 34 between a split region 9 and the interdigital electrode 25 in place of the single-moded channel waveguides.

In this manner, the output from a subtraction circuit 32 exhibits a high S/N ratio since an offset component is suppressed.

In the second embodiment, TE/TM mode conversion of only the zeroth-order mode light is performed. Alternatively, TE/TM mode conversion of only the first-order mode light may be performed as in the first embodiment.

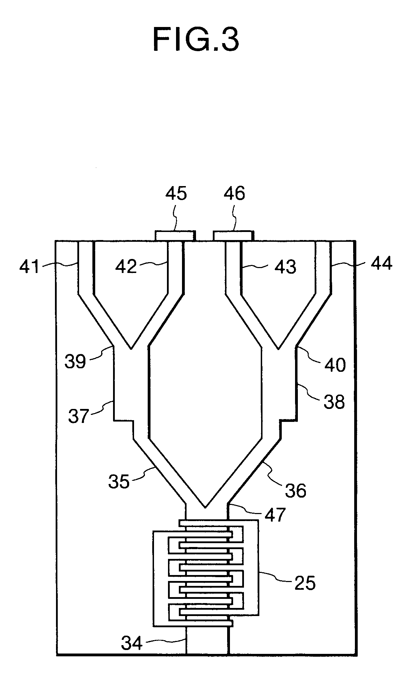

Fig. 3 is a schematic view showing an optical information detection device according to the third embodiment of the present invention. The optical information detection device of the third embodiment is substantially the same as that of the second embodiment, except for a polarization separation member. Therefore, only the polarization separation member will be explained below. Note that the same reference numerals in this embodiment denote the same parts as in the first and second embodiments, and a detailed description thereof will be omitted.

Zeroth-order mode light whose polarization state is converted from the TE mode to the TM mode by an interdigital electrode 25, zeroth-order mode light in the TE mode, and the first-order mode light which remains in the TE mode are distributed into two light-distribution single-moded channel waveguides 35 and 36 by a split region 47. The light-distribution single-moded channel waveguides 35 and 36 respectively have TE/TM mode separation double-moded channel waveguides 37 and 38 (polarization separation double-moded channel waveguides). The polarization separation double-moded channel waveguides 37 and 38 respectively have split regions 39 and 40 at their output sides, and these split regions respectively have two each light-distribution single-moded channel waveguides 41, 42, 43, and 44. Of these four light-distribution single-moded channel waveguides 41, 42, 43, and 44, the two inner light-distribution single-moded channel waveguides 42 and 43 are provided with photodetectors 45 and 46 at their exit edges.

The length of each of the polarization separation double-moded channel waveguides 37 and 38 is selected so that only the TE mode propagates through the inner single-moded channel waveguide 42 or 43 in the split region 39 or 40. Such a structure is well known as a TE/TM mode splitter.

With this structure, TE mode light, i.e., zeroth- and first-order mode light components in the TE mode, which propagate through the single-moded channel waveguides 35 and 36, selectively reach the photodetectors 45 and 46.

In the third embodiment as well, TE/TM mode conversion may be performed for the first-order mode light as in the first and second embodiments.

According to the present invention, the S/N ratio is improved by suppressing zeroth-order mode light. However, as shown in equations (3) and (4), since the signal component is also proportional to the zeroth-order mode, the signal component can no longer be obtained if the zeroth-order mode light is completely suppressed. The S/N ratio is maximized when the overlapping area between an intensity distribution curve 93 of the zeroth-order mode light and an intensity distribution curve 94 of the first-order mode light becomes largest in Fig. 12. Therefore, the zeroth-order mode light must be suppressed to a desired degree. For this purpose, in each of the first, second, and third embodiments, the degree of suppression of the zeroth-order mode light was adjusted by changing the voltage to be applied to the interdigital electrode 8 or 25 having a periodic structure.

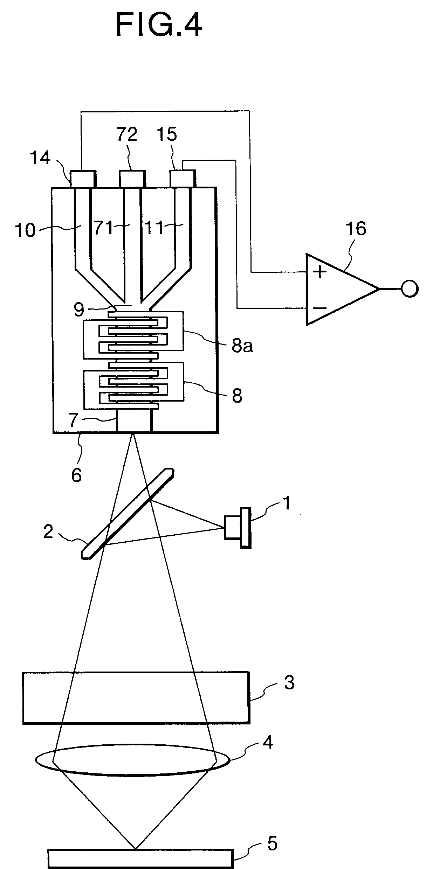

Fig. 4 is a schematic diagram showing a confocal laser scanning mode interference microscope which uses an optical information detection device according to the fourth embodiment of the present invention. Note that the same reference numerals in this embodiment denote the same parts as in the first embodiment, and a detailed description thereof will be omitted.

The confocal laser scanning mode interference microscope shown in Fig. 4 is constituted by a laser light source 1, a half mirror 2, an X-Y scanning means 3 for scanning light emitted from the laser light source 1 toward the surface of a specimen 5, a lens 4, a substrate 6, a double-moded channel waveguide 7 formed on the substrate 6, light-distribution single-moded channel waveguides 10, 11, and 71, TE/TM mode converters 8 and 8a, photodetectors 14, 15, and 72, and a subtraction circuit 16. Note that the laser light source 1 comprises a helium neon laser, and the substrate 6 comprises an X-cut Y-propagation lithium niobate substrate. On the other hand, the X-Y scanning means 3 comprises a galvano scanner. However, any other scanning means may be used as long as they can scan a laser beam. For example, a polygonal mirror or the like may be used. The single-moded channel waveguides 10 and 11 comprise ones which guide only TE mode light, and the single-moded channel waveguide 71 comprises one which guides both TE mode light and TM mode light.

A method of manufacturing the single-moded channel waveguides 10, 11, and 71 and the TE/TM mode converters 8 and 8a, which are formed on the substrate 6, will be briefly described below.

The double-moded channel waveguide 7 and the light-distribution single-moded channel waveguide 71 were formed by thermally diffusing titanium (Ti) on the lithium niobate substrate 6. On the other hand, the light-distribution single-moded channel waveguides 10 and 11 were formed by performing proton exchange on the lithium niobate substrate 6. Note that the region formed by thermally diffusing Ti on the lithium niobate substrate serves as an optical waveguide for both ordinary rays (TM mode light in the fourth embodiment) and extraordinary rays (TE mode light in the fourth embodiment), and the region formed by performing proton exchange on the lithium niobate substrate serves as an optical waveguide for only extraordinary rays (TE mode light in the fourth embodiment). The TE/TM mode converters 8 and 8a were formed by depositing Al after a silicon oxide layer (buffer layer) was formed.

The operation of the confocal laser scanning mode interference microscope according to the fourth embodiment will be described below.

Light emitted from the linearly polarized laser light source 1 is reflected by the half mirror 2, and is focused on the surface of the object (specimen) 5 to be detected via the X-Y scanning means 3 and the lens 4. The light reflected by the surface of the object 5 to be detected is incident on the incident end face of the double-moded channel waveguide 7 via the lens 4, the X-Y scanning means 3, and the half mirror 2 again. The light incident on the double-moded channel waveguide 7 excites zeroth- and first-order mode light components in correspondence with a step or a change in reflectance in the spot focused on the object 5 to be detected. The laser light source 1 is arranged, so that light to be excited in the substrate is TM mode light.

The substrate 6 used in the fourth embodiment is an X-cut Y-propagation lithium niobate substrate, and has an optical anisotropy and an electrooptic effect. Therefore, when voltages are applied to interdigital electrodes 8 and 8a, which are arranged on the double-moded channel waveguide 7 and each have a periodic structure, and an electric field is applied to the double-moded channel waveguide 7, the interdigital electrode 8 serves as a zeroth-order mode TE/TM mode converter, and the interdigital electrode 8a serves as a first-order mode TE/TM mode converter. At this time, by adjusting the voltages to be applied to the interdigital electrodes (TE/TM mode converters) 8 and 8a, the interdigital electrode (TE/TM mode converter) 8 converts some light components (a proper amount) of the zeroth-order mode light into TE mode light, and the interdigital electrode (TE/TM mode converter) 8a converts almost all first-order light components into TE mode light. Note that the TE/TM mode conversion amount of the zeroth-order mode light is preferably determined to maximize the overlapping area between the intensity distribution curves of the zeroth- and first-order mode light components in the TE mode, as shown in Fig. 12.

The zeroth-order mode light which is TE/TM mode-converted by the interdigital electrode 8 from the TM mode to the TE mode by a proper amount, and the first-order mode light which is TE/TM mode-converted by the interdigital electrode 8a from the TM to TE mode are split into the two outer light-distribution single-moded channel waveguides 10 and 11 by a split region 9. On the other hand, the zeroth-order mode light, which is not TE/TM mode-converted, i.e., remains in the TM mode, is split into the central light-distribution single-moded channel waveguide 71. As a result, an output signal from the subtraction circuit 16, which is obtained from the photodetectors 14 and 15 attached to the exit edges of the two light-distribution single-moded channel waveguides 10 and 11, exhibits a high S/N ratio since an offset component is suppressed.

In the fourth embodiment, the central light-distribution single-moded channel waveguide 71 comprises a titanium-indiffused waveguide for guiding light components in both the TE and TM polarization modes. Alternatively, when the waveguide 71 comprises a nickel-indiffused waveguide which guides only the TM mode, the signal component can be detected more efficiently. A method of forming a waveguide which guides only ordinary light (TM mode light in the fourth embodiment) by thermally diffusing nickel on the lithium niobate substrate is described in detail in P. -K. Wei and W. -S. Wang, "Novel TE-TM mode splitter on lithium niobate using nickel in-diffusion and proton exchange techniques", Electron. Lett., vol. 30 (1994) 35-37.

In the fourth embodiment, the laser light source 1 is arranged, so that light propagating through the optical waveguide is TM mode light before being TE/TM mode-converted by the TE/TM mode converter. Alternatively, when the light source 1 is arranged to obtain TE mode light, the same result can be expected. However, in this case, the two outer ones of the three light-distribution single-moded channel waveguides preferably comprise nickel indiffused waveguides which guide only TM mode light, and the central light-distribution single-moded channel waveguide preferably comprises a proton exchange waveguide which guides only TE mode light.

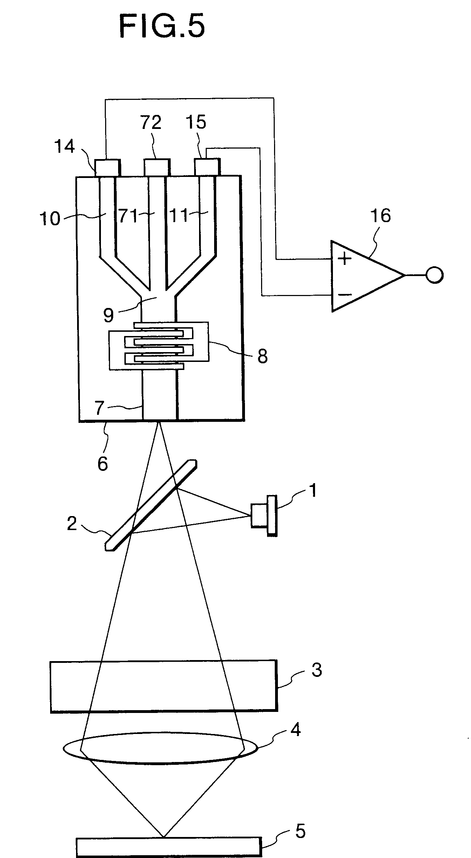

Fig. 5 is a schematic diagram showing a confocal laser scanning mode interference microscope which uses an optical information detection device according to the fifth embodiment of the present invention. Note that the same reference numerals in this embodiment denote the same parts as in the fourth embodiment, and a detailed description thereof will be omitted.

The arrangement of the fifth embodiment is substantially the same as that of the fourth embodiment, and a description of the same parts will be omitted by denoting them using the same reference numerals. In the fourth embodiment, TE/TM mode conversion is performed for both the zeroth- and first-order mode light components which are excited in the double-moded channel waveguide by light incident on the double-moded channel waveguide 7. However, in the fifth embodiment, TE/TM mode conversion is performed for only the zeroth-order mode light.

The operation of the confocal laser scanning mode interference microscope according to the fifth embodiment will be described below.

Light emitted from a linearly polarized laser light source 1 is reflected by a half mirror 2, and is focused on the surface of an object 5 to be detected via an X-Y scanning means 3 and a lens 4. The light reflected by the surface of the object 5 to be detected is incident on the incident end face of a double-moded channel waveguide 7 via the lens 4, the X-Y scanning means 3, and the half mirror 2 again. The light incident on the double-moded channel waveguide 7 excites zeroth- and first-order mode light components in correspondence with a step or a change in reflectance in the spot focused on the object 5 to be detected. The laser light source 1 is arranged, so that light to be excited in the substrate is TE mode light unlike in the fourth embodiment.

The substrate 6 used in the fifth embodiment is an X-cut Y-propagation lithium niobate substrate, and has an optical anisotropy and an electrooptic effect. Therefore, when a voltage is applied to an interdigital electrode 8 which is arranged on the double-moded channel waveguide 7 and has a periodic structure, and an electric field is applied to the double-moded channel waveguide 7, the interdigital electrode 8 serves as a zeroth-order mode TE/TM mode converter. At this time, by adjusting the voltage to be applied to the interdigital electrode (TE/TM mode converter) 8, the interdigital electrode (TE/TM mode converter) 8 converts some light components (proper amount) of the zeroth-order mode light into TM mode light. Note that the TE/TM mode conversion amount of the zeroth-order mode light is preferably determined to maximize the overlapping area between the intensity distribution curves of the zeroth- and first-order mode light components in the TE mode, as shown in Fig. 12.

The zeroth-order mode light which is not TE/TM mode-converted by the interdigital electrode 8, and the first-order mode light are split into two outer light-distribution single-moded channel waveguides 10 and 11 which guide only TE mode light by a split region 9. On the other hand, the zeroth-order mode light which is TE/TM mode-converted from the TE mode to the TM mode by the interdigital electrode 8 is split into a central single-moded channel waveguide 71 via the split region 9. As a result, an output signal from the subtraction circuit 16, which is obtained from photodetectors 14 and 15 attached to the exit edges of the two light-distribution single-moded channel waveguides 10 and 11, exhibits a high S/N ratio since an offset component is suppressed.

Since the fifth embodiment requires only one TE/TM mode converter while the fourth embodiment requires two TE/TM mode converters, the fifth embodiment requires lower cost than in the fourth embodiment, and can simplify the manufacturing process.

In the fifth embodiment, when the central light-distribution single-moded waveguide comprises a nickel indiffused waveguide as in the fourth embodiment, the signal component can be more efficiently detected. In the fifth embodiment, the light source is arranged to obtain TE mode incident light. However, the same effect can be expected if the light source is arranged to obtain TM mode incident light as in the fourth embodiment.

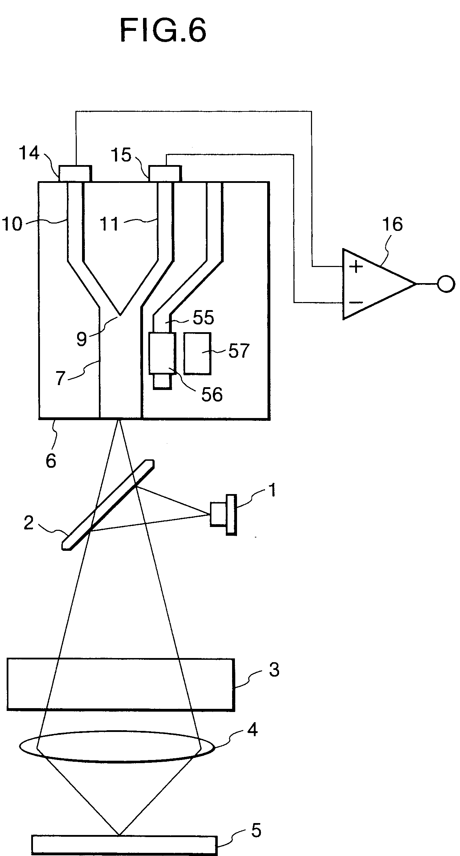

Fig. 6 is a schematic diagram showing a confocal laser scanning mode interference microscope which uses an optical information detection device according to the sixth embodiment of the present invention. Note that the same reference numerals in this embodiment denote the same parts as in the first embodiment, and a detailed description thereof will be omitted.

In the confocal laser scanning mode interference microscope, light emitted from a linearly polarized laser light source 1 is reflected by a half mirror 2, and is focused on the surface of an object 5 to be detected via an X-Y scanning means 3 and a lens 4. The light reflected by the surface of the object 5 to be detected is transmitted through the lens 4, the X-Y scanning means 3, and the half mirror 2 again, and is incident on the incident end face of a double-moded channel waveguide 7. The double-moded channel waveguide 7 and light-distribution single-moded channel waveguides 10 and 11 were formed by thermally diffusing titanium on a lithium niobate substrate 6. The light incident on the double-moded channel waveguide 7 excites zeroth- and first-order mode light components in correspondence with a step or a change in reflectance in the spot focused on the object 5 to be detected.

A coupling channel waveguide 55 is arranged in the vicinity of the double-moded channel waveguide 7. Therefore, the zeroth- and first-order mode light components, which propagate through the double-moded channel waveguide 7, are respectively coupled to the coupling channel waveguide 55 in a region where the coupling channel waveguide 55 exists, and power shift begins. The coupling channel waveguide 55 is provided with electrodes 56 and 57 via a buffer layer consisting of silicon oxide. The equivalent refractive index of the coupling channel waveguide 55 is almost equal to that of the zeroth-order mode light which propagates through the double-moded channel waveguide 7, and the effective length of the coupling channel waveguide 55 is selected so that almost no first-order mode light power-shifts, and the zeroth-order mode light power-shifts by a desired degree. Therefore, the zeroth-order mode light which propagates through the double-moded channel waveguide 7 selectively power-shifts to the coupling channel waveguide 55.

As a result, the zeroth-order mode light which propagates through the double-moded channel waveguide 7 is selectively suppressed. The light from which the zeroth-order mode light is selectively suppressed is split into the two light-distribution single-moded channel waveguides 10 and 11 by a split region 9. Two photodetectors 14 and 15 connected to the two light-distribution single-moded channel waveguides 10 and 11 receive light which has a small offset component and a large signal component. As a result, the output from a subtraction circuit 16 exhibits a high S/N ratio.

As described above, the S/N ratio could be improved by suppressing the zeroth-order mode light.

In the sixth embodiment as well, the degree of suppression of the zeroth-order mode light is controlled not to completely suppress the zeroth-order mode light. For this purpose, the equivalent refractive index of the coupling channel waveguide, the interval between the coupling and the double-moded channel waveguides, and the length of the coupling channel wavelength can be controlled. When a material having an electrooptic effect is used as the substrate like in the sixth embodiment, the electrodes 56 and 57 are preferably arranged, as shown in Fig. 6, so that the voltage applied across the electrodes 56 and 57 is changed to change the effective refractive index and the effective length of the coupling channel waveguide, thereby suppressing the zeroth-order mode light to a desired degree.

In the sixth embodiment, the width of the double-moded channel waveguide 7 is 8 μm, and the width of the coupling channel waveguide 55 is 3 μm. In addition, the interval between these two waveguides is 2.5 μm.

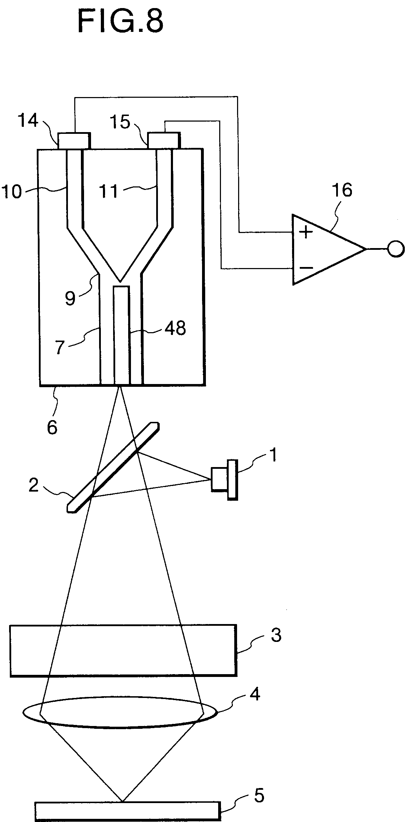

Fig. 8 is a schematic diagram showing a confocal laser scanning mode interference microscope which uses an optical information detection device according to the seventh embodiment of the present invention. Note that the same reference numerals of the confocal laser scanning mode interference microscope in Fig. 8 denote the same parts as in the first embodiment, and a detailed description thereof will be omitted.

In the confocal laser scanning mode interference microscope, light emitted from a linearly polarized laser light source 1 is reflected by a half mirror 2, and is focused on the surface of an object 5 to be detected via an X-Y scanning means 3 and a lens 4. The light reflected by the surface of the object 5 to be detected is transmitted through the lens 4, the X-Y scanning means 3, and the half mirror 2 again, and is incident on the incident end face of a double-moded channel waveguide 7, which is formed on an X-cut lithium niobate substrate 6 by thermally diffusing Ti. The light incident on the double-moded channel waveguide 7 excites zeroth- and first-order mode light components in correspondence with a step or a change in reflectance in the spot focused on the object 5 to be detected.

A stripe-shaped pattern 48 consisting of aluminum (metal plate) is formed on the double-moded channel waveguide 7. The aluminum stripe-shaped pattern 48 has a width about 1/3 that of the double-moded channel waveguide 7, i.e., 2.5 μm, and has a length of 5 mm. The zeroth- and first-order mode light components excited in the double-moded channel waveguide 7 propagate while interfering with each other, and light, which propagates near the center of the double-moded channel waveguide 7, is absorbed by the metal plate and attenuates in a region where the stripe-shaped pattern 48 exists. In this case, the zeroth-order mode light strongly attenuates since its high-intensity region overlaps the region where the stripe-shaped pattern 48 exists. On the other hand, the first-order mode light whose high-intensity region has almost no area overlapping the region where the stripe-shaped pattern 48 exists undergoes almost no attenuation.

As a result, the zeroth-order mode light is selectively suppressed. The light from which the zeroth-order mode light is selectively suppressed is split into two light-distribution single-moded channel waveguides 10 and 11 by a split region 9. Two photodetectors 14 and 15 connected to the two light-distribution single-moded channel waveguides 10 and 11 receive light which has a small offset component and a large signal component. As a result, the output from a subtraction circuit 16 exhibits a high S/N ratio.

In the seventh embodiment, since the direction of polarization of the laser light source 1 is arranged to excite the TM mode in the substrate 6, the length of the stripe-shaped pattern 48 can be relatively short.

As disclosed in Japanese Laid-Open Patent Application No. 4-208913, a single-moded channel waveguide may be arranged between the light-distribution single-moded channel waveguides 10 and 11, and a laser light source may be arranged at the end face of this single-moded channel waveguide to emit light. In this case, a polarization control member is preferably arranged between the optical information detection device and the object 5 to be detected, so light propagating through the double-moded channel waveguide 7 is a TE mode in the forward path, and is a TM mode in the backward path.

In the seventh embodiment as well, the degree of suppression of the zeroth-order mode light is controlled so as not to completely suppress the zeroth-order mode light. For this purpose, the width and length of the stripe-shaped pattern 48 can be changed.

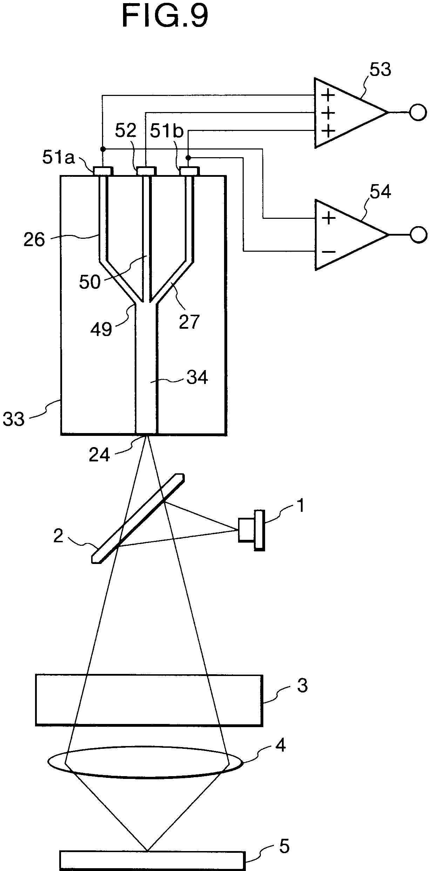

Fig. 9 is a schematic diagram showing a confocal laser scanning mode interference microscope which uses an optical information detection device according to the eighth embodiment of the present invention.

The arrangement of the eighth embodiment is substantially the same as that of the seventh embodiment shown in Fig. 8, and a detailed description of the same parts will be omitted by denoting them by the same reference numerals.

In the eighth embodiment, a laser beam emitted from a laser light source 1 is reflected by a half mirror 2, and is focused on the surface of an object 5 to be detected via an X-Y scanning means 3 and a lens 4. The light reflected by the surface of the object 5 to be detected is incident on an incident end face 24 of a double-moded channel waveguide 34 via the lens 4, the X-Y scanning means 3, and the half mirror 2 again. The light incident on the double-moded channel waveguide 34 excites zeroth- and first-order mode light components in correspondence with a step or a change in reflectance in the spot focused on the object 5 to be detected. The zeroth- and first-order mode light components excited in the double-moded channel waveguide 34 reach a split region 49 while interfering with each other. The split region 49 is connected to two light-distribution single-moded channel waveguides 26 and 27 connected to photodetectors 51a and 51b, and a selective removal channel waveguide 50 whose center coincides with the center of the double-moded channel waveguide 34, and which has a width about 1/3 that of the double-moded channel waveguide 34. With this width, the first-order mode light is cut off (not excited) in the selective removal channel waveguide 50. Of light components propagating through the double-moded channel waveguide 34, most zeroth-order mode light propagates through the selective removal channel waveguide 50 since its high-intensity region falls within the width of the selective removal channel waveguide 50, and only a small amount of zeroth-order mode light components propagates through the light-distribution single-gle-moded channel waveguides 26 and 27. On the other hand, the first-order mode light does not propagate through the selective removal channel waveguide 50 since it is cut off in the selective removal channel waveguide 50, and propagates through the light-distribution single-moded channel waveguides 26 and 27.

As a result, light propagating through the light-distribution single-moded channel waveguides 26 and 27 is light which includes a small offset component and a large signal component. Therefore, the output from a subtraction circuit 54, which subtracts signals from the photodetectors 51a and 51b connected to the light-distribution single-moded channel waveguides 26 and 27, exhibits a high S/N ratio. On the other hand, in the arrangement of the eighth embodiment, the zeroth-order mode light removed by the selective removal channel waveguide 50 is detected by a photodetector 52, and is added to the outputs from the photodetectors 51a and 51b by an addition circuit 53. Thus, in the confocal laser scanning mode interference microscope of the eighth embodiment, the S/N ratio upon observation of a differential image can be improved without decreasing the light amount upon observation of a bright field image.

As described above, the zeroth-order mode light can be suppressed, and a high S/N ratio can be obtained.

In the eighth embodiment as well, the degree of suppression of the zeroth-order mode light is controlled not to completely suppress the zeroth-order mode light. For this purpose, the width of the channel waveguide 50 can be changed.

In each of the first to eighth embodiments, the effective length (the length of the double-moded region) L of the double-moded channel waveguide 7 or 34 is set to be a length given by equation (1) when only phase information is to be observed, is set to be a length given by equation (2) when only amplitude information is to be observed, and is set to be a length other than those given by equations (1) and (2) when both the phase information and amplitude information are to be observed.

An electrode for applying an electric field to the double-moded channel waveguide 7 or 34 may be arranged, and the length of the double-moded region may be changed by applying an electric field to the double-moded channel waveguide 7 or 34. With this arrangement, the length of the double-moded region can be corrected even when it is shifted from a length with which information of light incident on the double-moded channel waveguide is to be measured.

Although not shown in Figs. 1, 4, 5, 6, 8, and 9, the output from the subtraction circuit 16 or 54 may be input to image control means, and the reflection distribution of light or the step on the object 5 to be detected may be visualized by the image control means. When the light spot formed on the object 5 to be detected is scanned in the X and Y directions by the lens 4 using the X-Y scanning means 3, the position of the light spot may be stored in image control means (not shown), a signal from the subtraction circuit 16 or 54, which signal corresponds to the position of the light spot, may be simultaneously input in the image control means, and the reflection distribution of light or the step on the object 5 to be detected corresponding to the position of the light spot may be visualized, thereby obtaining the entire image of the object to be detected. In the eighth embodiment shown in Fig. 9, the output from the addition circuit 53 may also be displayed on a monitor (not shown).

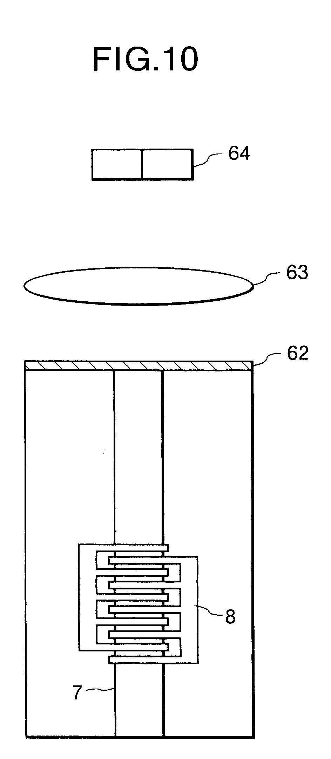

In each of the first to eighth embodiments, light is distributed by the light-distribution single-moded channel waveguides 10 and 11; 26 and 27; or 41, 42, 43, and 44. However, the present invention is not limited to the single-moded channel waveguides, and double-moded or multi-moded channel waveguides may be used. In the first, sixth, and seventh embodiments, and the second embodiment, when the aluminum rectangular pattern is arranged on the double-moded channel waveguide, light emerging from the double-moded channel waveguide may be observed by, e.g., a photodetector without arranging light-distribution single-moded channel waveguides like in the conventional optical information detection device. Fig. 10 shows a modification for detecting light emerging from the double-moded channel waveguide by a photodetector without arranging the light-distribution single-moded channel waveguide in the first embodiment. In Fig. 10, the interdigital electrode 8 is arranged on the double-moded channel waveguide 7 as in the first embodiment. A polarization plate 62 which selectively transmits TE mode light is arranged at the output edge of the double-moded channel waveguide as in the first embodiment. TE mode light transmitted through the polarization plate 62 is focused on and detected by a two-split photodetector 64 by a lens 63. Note that the photodetector need only detect the intensity distribution of light propagating through the double-moded channel waveguide, and a PSD, a linear sensor, or the like may be used instead. In Fig. 10, the light emerging from the double-moded channel waveguide 7 and transmitted through the polarization plate 62 is focused on the two-split photodetector 64 by the lens 63. Alternatively, the two-split photodetector may be directly connected to the polarization plate 62 without arranging the lens 63. With this arrangement as well, the S/N ratio of optical information can be remarkably improved as in the first embodiment. Also, when an aluminum rectangular pattern is arranged on the double-moded channel waveguide in the sixth and seventh embodiments and the second embodiment, the light emerging from the double-moded channel waveguide can be directly detected by the photodetector.

Having described specific embodiments of this invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. An optical information detection device comprising:
    a substrate;
    a double-moded channel waveguide formed on said substrate, said double-moded channel waveguide having an incident end face which receives incident light, and zeroth-order mode light and first-order mode light being excited in said double-moded channel waveguide in accordance with light incident on the incident end face;
    a photodetector for detecting an intensity distribution of light propagating through said double-moded channel waveguide; and
    a first member for selectively removing the zeroth-order mode light excited in said double-moded channel waveguide.

2. A device according to claim 1, further comprising:
    a split region which splits light propagating through said double-moded channel waveguide and is formed on said substrate; and
    two light-distribution channel waveguides which guide light components split by said split region, and are formed on said substrate, and
    wherein said photodetector detects light components respectively emerging from said two light-distribution channel waveguides.

3. A device according to claim 1, wherein said first member comprises:
    a TE/TM mode converter which is arranged on said double-moded channel waveguide, and performs selective TE/TM mode conversion of a direction of polarization of the zeroth-order mode light excited in said double-moded channel waveguide; and

a polarization separation member which is arranged between said TE/TM mode converter and said photodetector and blocks the zeroth-order mode light, which is TE/TM mode-converted by said TE/TM mode converter, so that the zeroth-order mode light does not reach said photodetector.

4. A device according to claim 3, wherein said TE/TM mode converter comprises an electrode which is arranged on said double-moded channel waveguide, and has a periodic structure.

5. A device according to claim 3, wherein said polarization separation member comprises a polarization plate which is arranged in front of said photodetector.

6. A device according to claim 3, wherein said polarization separation member comprises a metal plate which is arranged on said double-moded channel waveguide.

7. A device according to claim 3, further comprising:

a split region which splits light propagating through said double-moded channel waveguide and is formed on said substrate; and

two light-distribution channel waveguides which guide light components split by said split region, and are formed on said substrate, and

wherein said polarization separation member comprises a polarization plate arranged in front of said photodetector, and said photodetector detects light components respectively emerging from said two light-distribution channel waveguides.

8. A device according to claim 3, further comprising:

a split region which splits light propagating through said double-moded channel waveguide and is formed on said substrate; and

two light-distribution channel waveguides which guide light components split by said split region, and are formed on said substrate, and

wherein said polarization separation member comprises metal plates respectively arranged on said two light-distribution channel waveguides, and said photodetector detects light components respectively emerging from said two light-distribution channel waveguides.

9. A device according to claim 3, further comprising:

a first split region which splits light propagating through said double-moded channel waveguide and is formed on said substrate; and

two first light-distribution channel waveguides which guide light components split by said first split region, and are formed on said substrate, and

wherein said polarization separation member comprises:

two polarization separation double-moded channel waveguides which are respectively connected to said first light-distribution channel waveguides, each have a predetermined lengths, and are formed on said substrate;

two second split regions which respectively split light components propagating through said polarization separation double-moded channel waveguides, and are formed on said substrate; and

four second light-distribution channel waveguides which respectively guide light components split by said second split regions, and are formed on said substrate, and

said photodetector detects light components emerging from the two second light-distribution channel waveguides, which guide light including the first-order mode light, of said four second light-distribution channel waveguides.

10. A device according to claim 1, wherein said first member comprises a coupling channel waveguide which is formed on said substrate, is arranged in the vicinity of and to be substantially parallel to said double-moded channel waveguide, and can be coupled to the zeroth-order mode light propagating through said double-moded channel waveguide.

11. A device according to claim 10, wherein an effective refractive index of said coupling channel waveguide with respect to light propagating therethrough is substantially equal to an effective refractive index of said double-moded channel waveguide with respect to the zeroth-order mode light propagating therethrough.

12. A device according to claim 10, wherein said substrate has an electrooptic effect, and an electrode for applying an electric field to said coupling channel waveguide is arranged on or in the vicinity of said coupling channel waveguide.

13. A device according to claim 12, further comprising:

a split region which splits light propagating through said double-moded channel waveguide and is formed on said substrate; and

two light-distribution channel waveguides which guide light components split by said split region, and are formed on said substrate, and

wherein said photodetector detects light components respectively emerging from said two light-distribution channel waveguides.

14. A device according to claim 1, further comprising:

a split region which splits light propagating through said double-moded channel waveguide and is formed on said substrate; and

three light-distribution channel waveguides which guide light components split by said split region, and are formed on said substrate, and

wherein said first member comprises:

a first TE/TM mode converter which is arranged on said double-moded channel waveguide, and performs selective TE/TM mode conversion of a direction of polarization of the zeroth-order mode light excited in said double-moded channel waveguide; and

a second TE/TM mode converter which is arranged on said double-moded channel waveguide, and performs selective TE/TM mode conversion of a direction of polarization of the first-order mode light excited in said double-moded channel waveguide,

said photodetector detects light components emerging from at least the two outer light-distribution channel waveguides of said three light-distribution channel waveguides, and

the two outer light-distribution channel waveguides guide only light which has a direction of polarization perpendicular to a direction of polarization of light incident on said double-moded channel waveguide.

15. A device according to claim 14, wherein the central light-distribution channel waveguide of said three light-distribution channel waveguides guides only light which has a direction of polarization perpendicular to the direction of polarization of light propagating through the two outer light-distribution channel waveguides.

16. A device according to claim 1, further comprising:

a split region which splits light propagating through said double-moded channel waveguide and is formed on said substrate; and

three light-distribution channel waveguides which guide light components split by said split region, and are formed on said substrate, and

wherein said first member comprises:

a TE/TM mode converter which is arranged on said double-moded channel waveguide, and performs selective TE/TM mode conversion of a direction of polarization of the zeroth-order mode light excited in said double-moded channel waveguide,

said photodetector detects light components emerging from at least the two outer light-distribution channel waveguides of said three light-distribution channel waveguides, and

the two outer light-distribution channel waveguides guide only light which has the same direction of polarization as a direction of polarization of light incident on said double-moded channel waveguide.

17. A device according to claim 16, wherein the central light-distribution channel waveguide of said three light-distribution channel waveguides guides only light which has a direction of polarization perpendicular to the direction of polarization of light propagating through the two outer light-distribution channel waveguides.

18. An optical information detection device comprising:

a substrate;

a double-moded channel waveguide formed on said substrate, said double-moded channel waveguide having an incident end face which receives incident light, and zeroth-order mode light and first-order mode light being excited in said double-moded channel waveguide in accordance with light incident on the incident end face;

a first photodetector for detecting an intensity distribution of light propagating through said double-moded channel waveguide; and

a second member for selectively removing light which propagates near a center of said double-moded channel waveguide.

19. A device according to claim 18, further comprising:

a split region which splits light propagating through said double-moded channel waveguide and is formed on said substrate; and

two light-distribution channel waveguides which guide light components split by said split region, and are formed on said substrate, and

wherein said first photodetector detects light components respectively emerging from said two light-distribution channel waveguides.

20. A device according to claim 18, wherein said second member comprises a stripe-shaped metal plate which has a width smaller than a width of said double-moded channel waveguide, and is arranged on a surface of said double-moded channel waveguide so that a center thereof coincides with the center of said double-moded channel waveguide.

21. A device according to claim 18, wherein said second member comprises a selective removal channel waveguide which has a width smaller than a width of said double-moded channel waveguide, and is connected to said double-moded channel waveguide so that a center thereof coincides with the center of said double-moded channel waveguide.

22. A device according to claim 21, wherein the width of said selective removal channel waveguide is a width with which the first-order mode light propagating through said double-moded channel waveguide is cut off.

23. A device according to claim 21, further comprising a second photodetector for detecting light emerging from said selective removal channel waveguide.

24. A device according to claim 20, further comprising:

a split region which splits light propagating through said double-moded channel waveguide and is formed on said substrate; and

two light-distribution channel waveguides which guide light components split by said split region, and are formed on said substrate, and

wherein said first photodetector detects light components respectively emerging from said two light-distribution channel waveguides.

25. A device according to claim 21, further comprising:

a split region which splits light propagating through said double-moded channel waveguide and is formed on said substrate;

two light-distribution channel waveguides which guide light components split by said split region, and are formed on said substrate; and

a second photodetector for detecting light emerging from said selective removal channel waveguide, and

wherein the width of said selective removal channel waveguide is a width with which the first-order mode light propagating through said double-moded channel waveguide is cut off, and said first photodetector detects light components respectively emerging from said two light-distribution channel waveguides.

26. A waveguide having a channel with an input for receiving incident radiation and an output for connection to radiation detecting means, wherein an even and an odd mode of said incident radiation are propagable in said channel, and means arranged selectively to attenuate the even mode which propagates in said channel.

# FIG.1

# FIG.2

EP 0 661 562 A2

# FIG.3

21

# FIG.4

# FIG.5

# FIG.6

FIG.7

# FIG.8

# FIG.9

# FIG.10

# FIG.11

# FIG.12